# EUROPÄISCHE PATENTSCHRIFT

(11) **EP 2 181 435 B1**
(45) Veröffentlichungstag und Bekanntmachung des Hinweises auf die Patenterteilung: **28.11.2012**
(21) Anmeldenummer: 08787140.6
(22) Anmeldetag: 12.08.2008
(51) Int. Cl.: G07C 5/08, H04L 29/08

(54) **DIAGNOSEVERFAHREN FÜR SCHIENENFAHRZEUGE**
DIAGNOSTIC METHOD FOR RAIL VEHICLES
PROCÉDÉ DE DIAGNOSTIC POUR VÉHICULES FERROVIAIRES

(30) Priorität: 22.08.2007 DE 102007039715
(43) Veröffentlichungstag der Anmeldung: 05.05.2010
(73) Patentinhaber: Siemens Aktiengesellschaft, 80333 München (DE)
(72) Erfinder: BEYER, Ralf, 91052 Erlangen (DE); DIRAUF, Michael, 96231 Bad Staffelstein (DE); SEPT, Jürgen, 91126 Wolkersdorf (DE)
(86) Internationale Anmeldenummer: PCT/EP2008/060584
(87) Internationale Veröffentlichungsnummer: WO 2009/024506

(56) Entgegenhaltungen:
- EP-A- 1 427 165
- WO-A1-2007/117370
- DE-A1- 10 307 344
- US-A1- 2005 131 595
- US-A1- 2005 171 661

## Beschreibung

Die Erfindung bezieht sich auf ein Diagnoseverfahren für Schienenfahrzeuge, bei dem für eine Anzahl zu überwachender Steuergeräte mit Hilfe eines jeweils zugeordneten speziellen Diagnose-Softwareprogramms Diagnosevorgänge ausgeführt werden.

Dies geschieht typischer Weise so, dass jedes Steuergerät für Service- und Instandhaltungszwecke eine speziell zugehörige Service Software benötigt. Bei typischen Schienenfahrzeugen kann es sich dabei um ca. 20 bis 50 verschiedene Diagnose-Softwareprogramme handeln. Diese bedingen mitunter, unterschiedliche Betriebssysteme. Hinzu kommt, dass bei einem typischen Lebenszyklus von 30 Jahren für Schienenfahrzeuge irgendwann keine Personalcomputer mehr erhältlich sein können, auf denen die speziellen Diagnose-Softwareprogramme laufen.

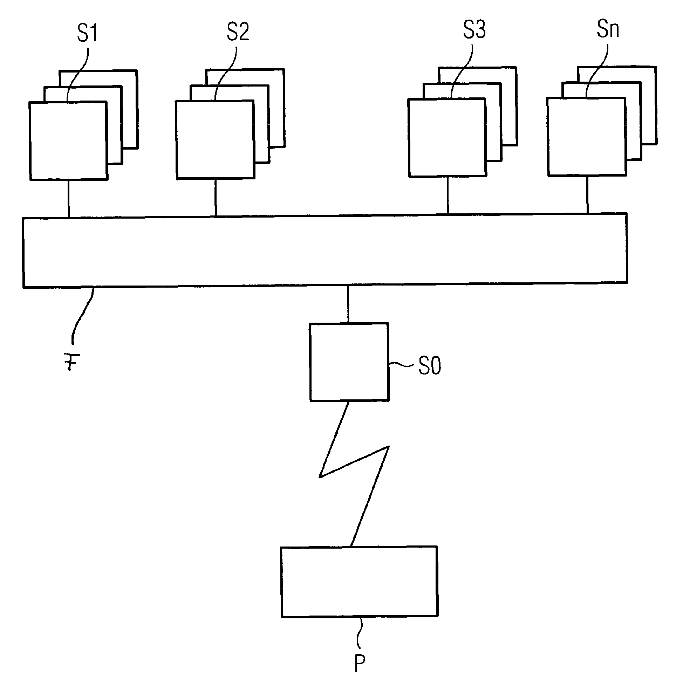

Als nach Artikel 54(3) EPÜ im Hinblick auf eine Neuheit der Erfindung zu berücksichtigender Stand der Technik ist die WO 2007/117370 A1 zu nennen. Insbesondere Figur 3 dieser Druckschrift zeigt ein Ausführungsbeispiel für ein Diagnosesystem mit darin enthaltenen Browser-Eigenschaften, bei dem jede Steuereinrichtung, die für eine bestimmte Komponente eines Fahrzeugs zuständig ist, ein zugehöriges Diagnose-Softwareprogramm enthält.

Zur verständlichen Wiedergabe von Diagnosedaten ist aus der US 2005/131595 A1 ein Verfahren bekannt, bei dem ein Fahrzeugzustand auf der Basis von Fahrzeugdiagnosedaten wiedergegeben wird. Dabei wird auch die Wiedergabe der Diagnosedaten in für einen Fahrzeugsführer verständlicher Form an einem entfernt gelegenen Computer angesprochen. Ausgehend hiervon liegt der Erfindung die Aufgabe zugrunde, das eingangs genannte Diagnoseverfahren hinsichtlich dessen langfristiger Nutzung besser verfügbar zu machen.

Diese Aufgabe wird bei dem Diagnoseverfahren der eingangs genannten Art dadurch gelöst, dass die Diagnose-Softwareprogramme auf dem jeweils zugehörigen Steuergerät ausgeführt werden und als Netz-Applikation ausgelegt sind, Diagnosevorgänge über einen zentralen Personalcomputer mittels Netzbrowser (Webbrowser) ausgeführt werden, wobei der Personalcomputer mit den Diagnose-Softwareprogrammen der Steuergeräte über Kommunikationsverbindungen Diagnosedaten austauscht und das Schienenfahrzeug als Netz-Seite auf dem Personal-Computer wiedergegeben wird, die Verknüpfungen zu den Diagnose-Software-Programmen bereitstellt.

Die Softwareprogramme unterstützen Tätigkeiten, wie Anzeigen und Setzen von Werten, Anzeigen von Fehlermeldungen, Starten von Prüfläufen, Anzeigen von Prüflaufergebnissen, Upload bzw. Download von Dateien.

Bei diesem Verfahren werden die Diagnose-Softwareprogramme in jedes einzelne Steuergerät "verlegt", so dass keine, den speziellen Anforderungen der Diagnose-Softwareprogramme genügenden Personalcomputer mehr benötigt werden.

Aufgrund der Auslegung der Diagnose-Softwareprogramme als Netz-Applikationen kann ein handelsüblicher Personalcomputer mit einem handelsüblichen Web-Browser für Diagnosezwecke zum Einsatz gebracht werden.

Auch das Schienenfahrzeug selbst wird als Netz-Seite auf dem zentralen Personalcomputer wiedergegeben, wobei die Netzseite Verknüpfungen zu den Diagnose-Softwareprogrammen bereitstellt. Dies ermöglicht es, beispielweise bei einer Fehlersuche mit Hilfe des Web-Browsers von einer höheren Ebene aus bis auf einzelne Diagnose-Softwareprogramme vorzudringen (drill down).

Auch eine Schienenfahrzeugflotte kann als Netz-Seite wiedergegeben sein, so dass hiermit eine noch über der Schienenfahrzeug-Ebene liegende weitere Netz-Ebene geschaffen wird.

Ein Ausführungsbeispiel der Erfindung wird nachfolgend anhand der Zeichnung noch näher erläutert. Die einzige Figur zeigt eine schematische Blockdiagrammdarstellung einer Diagnose-Anordnung zur Durchführung eines Diagnoseverfahrens für Schienenfahrzeuge.

In der Figur sind Steuergeräte S1, S2, S3, ..., Sn dargestellt, die bestimmten Funktionen eines Schienenfahrzeugs zugeordnet sind, wobei von jedem Typ Steuerung m Stück (sprich Instanzen) existieren können. Typische solche Funktionen sind: Antriebssteuerung, Bremssteuerung, Türsteuerung,

Die Steuergeräte S1, ..., Sn stehen mit einem Fahrzeugbus/- netzwerk F in Verbindung.

Auf jeder der Steuereinrichtungen S1, S2, S3, Sn ist ein zugehöriges Diagnose-Softwareprogramm installiert, mit dessen Hilfe erforderliche Diagnosevorgänge für das betreffende Steuergerät ausführbar sind.

Die Diagnose-Softwareprogramme sind als Netz-Applikation ausgeführt, so dass deren Benutzeroberflächen mit Hilfe eines geeigneten Netz-Browsers darstellbar sind.

Ein solcher Netz-Browser ist auf einem handelsüblichen Personalcomputer P, der mit jedem der Steuergeräte S1, S2, S3, ..., Sn in einer drahtlosen Kommunikationsverbindung steht, vorgesehen.

Auf diese Weise wird es ermöglicht, über dem Personalcomputer P auf die einzelnen Steuergeräte S1, S2, S3, Sn zu Diagnosenzwecken zuzugreifen.

Auch ein Schienenfahrzeug insgesamt kann für den Personalcomputer P als Netz-Seite (Web-Seite) wiedergegeben sein. Hierzu dient eine ebenfalls an den Fahrzeugbus angeschlossene Komponente SO, über die die Web-Applikationen der einzelnen Steuergeräte S1, ..., Sn aufgerufen werden können. Auf diese Weise wird auf dem Fahrzeug ein Web-Portal realisiert. Die zugehörige Benutzeroberfläche enthält dann Verknüpfungen zu den einzelnen Diagnose-Softwareprogrammen der Steuergeräte S1, S2, S3, Sn.

Bei einer noch erweiterten Ausführungsform der Erfindung kann zudem eine gesamte Fahrzeugflotte, zu der auch das oben beschriebene Schienenfahrzeug gehört, in Form einer Netz-Seite repräsentiert sein. In diesem Fall betreffen dann auf einer Benutzeroberfläche vorgesehene Verknüpfungen einzelne Schienenfahrzeuge aus der Flotte.

Die vorgesehene Hierarchie zwischen den verschiedenen Benutzeroberflächen, nämlich derjenigen der Flotte, derjenigen des Schienenfahrzeugs und derjenigen der einzelnen Diagnose-Softwareprogramme erlaubt es, je nach Bedarf, von einer höheren Ebene aus auf ein gewünschtes Diagnose-Softwareprogramm zuzugreifen und mit dessen Hilfe einen erforderlichen Diagnosevorgang auszuführen.

## Patentansprüche

1. Diagnoseverfahren für Schienenfahrzeuge, bei dem für eine Anzahl zu überwachender Steuergeräte (S1, S2, S3, Sn) mit Hilfe eines jeweils zugeordneten speziellen Diagnose-Softwareprogramms Diagnosevorgänge ausgeführt werden, **dadurch gekennzeichnet, dass**
die Diagnose-Softwareprogramme auf dem jeweils zugehörigen Steuergerät (S1, ..., Sn) ausgeführt werden und als Netz-Applikation ausgelegt sind,
Diagnosevorgänge über einen zentralen Personalcomputer (P) mittels Netzbrowser ausgeführt werden, wobei der Personalcomputer (P) mit den Diagnose-Softwareprogrammen der Steuergeräte (S1, S2, S3, S4n) über Kommunikationsverbindungen Diagnosedaten austauscht und
das Schienenfahrzeug als Netz-Seite auf dem Personalcomputer (P) wiedergegeben wird, die Verknüpfungen zu den Diagnose-Softwareprogrammen bereitstellt.

2. Verfahren nach Anspruch 1,
**dadurch gekennzeichnet, dass**
die Steuergeräte (S1, ..., Sn) über eine Komponente (SO) und einen Fahrzeugbus (F) mit dem Personalcomputer (P) in Verbindung stehen.

## Claims

1. Diagnostic method for rail vehicles, in which diagnostic procedures are carried out for a number of control devices (S1, S2, S3, Sn) which are to be monitored, using a respectively assigned specific diagnostic software program, **characterized in that** the diagnostic software programs are executed on the respectively associated control device (S1, ..., Sn) and are configured as a network application, diagnostic processes are executed using a central personal computer (P) by means of a network browser, **in that** the personal computer (P) exchanges diagnostic data with the diagnostic software programs of the control devices (S1, S2, S3, S4n) via communication links, and
the rail vehicle is represented as a network page on the personal computer (P) which makes available connections to the diagnostic software programs.

2. Method according to Claim 1,
**characterized in that**
the control devices (S1, ..., Sn) are connected to the personal computer (P) via a component (SO) and a vehicle bus (F).

## Revendications

1. Procédé de diagnostic pour des véhicules ferroviaires, dans lequel pour un certain nombre d'appareils ( S1, S2, S3, Sn ) de commande à contrôler, on effectue des opérations de diagnostic à l'aide d'un programme logiciel de diagnostic spécial associé respectivement,
**caractérisé en ce que**
les programmes logiciels de diagnostic sont exécutés sur l'appareil ( S1, ..., Sn) de commande associé respectivement et sont conçus en application réseau,
des opérations de diagnostic sont exécutées par un ordinateur ( P ) personnel central au moyen d'un navigateur de réseau, l'ordinateur ( P ) personnel échangeant des données de diagnostic avec les programmes logiciels de diagnostic des appareils ( S1, S2, S3, Sn ) de commande par des liaisons de communication et
le véhicule ferroviaire est reproduit en tant que page de réseau sur l'ordinateur ( P ) personnel, page qui met à disposition des liaisons avec les programmes logiciels de diagnostic.

2. Procédé suivant la revendication 1,
**caractérisé en ce que**
les appareils ( S1, ..., Sn ) de commande sont en liaison avec l'ordinateur ( P ) personnel par un composant ( SO) et par un bus ( F) de véhicule.
